(19) Europäisches Patentamt / European Patent Office / Office européen des brevets

(11) **EP 4 628 266 A1**

(12) **EUROPEAN PATENT APPLICATION**

(43) Date of publication:
08.10.2025 Bulletin 2025/41

(21) Application number: 25167689.6

(22) Date of filing: 01.04.2025

(51) International Patent Classification (IPC):
B26D 5/00 (2006.01)          B26D 5/32 (2006.01)
B26D 9/00 (2006.01)          B26F 1/38 (2006.01)

(52) Cooperative Patent Classification (CPC):
B26D 9/00; B26D 5/007; B26D 5/32; B26F 1/38;
B26D 1/085

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 02.04.2024 KR 20240044912

(71) Applicant: SAMSUNG SDI CO., LTD.
Yongin-si, Gyeonggi-do 17084 (KR)

(72) Inventors:
• Kim, Chan Hoon
  Suwon-si, Gyeonggi-do 16678 (KR)
• Kim, Hyo Jeong
  Suwon-si, Gyeonggi-do 16678 (KR)

(74) Representative: Gulde & Partner
Patent- und Rechtsanwaltskanzlei mbB
Berliner Freiheit 2
10785 Berlin (DE)

(54) **ELECTRODE PLATE MANUFACTURING DEVICE AND ELECTRODE PLATE MANUFACTURING METHOD**

(57)    An electrode plate manufacturing device includes a notching part configured to form one or more tabs on at least a portion of a film, a cutting part configured to cut the film to have a cut width, a feeding part configured to transfer the film from the notching part to the cutting part, and a processor configured to correct a position of the notching part based on at least one of a position of the tabs formed on the film and the cut width of the film.

FIG. 5

EP 4 628 266 A1

**Description**

BACKGROUND

1. Field

Embodiments relate to an electrode plate manufacturing device and an electrode plate manufacturing method.

2. Description of the Related Art

Recently, the demand for secondary batteries with high energy density and high capacity has been rapidly increasing with the rapid supply of electronic devices using batteries, such as mobile phones, notebook computers, electric vehicles, and the like. Accordingly, research and development for improving performance of lithium secondary batteries are being actively performed.

A lithium secondary battery is a battery including a positive electrode and a negative electrode including active materials capable of intercalation and deintercalation of lithium ions, and an electrolyte, and produces electrical energy due to oxidation and reduction reactions when lithium ions are intercalated and deintercalated at the positive electrode and the negative electrode.

The above-described information disclosed in the background technology of this disclosure is only for improving understanding of the background of the present disclosure, and accordingly, can include information which does not constitute the related art.

SUMMARY

Embodiments include an electrode plate manufacturing device, including a notching part configured to form one or more tabs on at least a portion of a film, a cutting part configured to cut the film to have a cut width, a feeding part configured to transfer the film from the notching part to the cutting part, and a processor configured to correct a position of the notching part based on at least one of a position of the tabs formed on the film and the cut width of the film.

The processor may be further configured to determine an interval between the tabs formed on the film from one side of a cut portion of the film based on the position of the tabs, resulting in a determined interval, compare the determined interval with a preset interval, and correct the position of the notching part based on the determined interval and the preset interval.

If the determined interval is smaller than the preset interval, the position of the notching part may be corrected to be closer to the cutting part, and if the determined interval is larger than the preset interval, the position of the notching part may be corrected to move away from the cutting part.

The processor may be further configured to compare the cut width of the film with a preset cut width, correct the position of the notching part to be closer to the cutting part if the cut width is smaller than the preset cut width, and correct the position of the notching part to move away from the cutting part when the cut width is larger than the preset cut width.

The processor may be further configured to set a direction in which the film is transferred as a reference axis, and correct the position of the notching part along the reference axis.

The processor may be further configured to calculate a position correction amount of the notching part according to [Equation 1] and correct the position of the notching part based on the position correction amount:

[Equation 1]

$$P = -(n + 1) \times a + b$$

wherein P is the position correction amount of the notching part, n is a number of films formed with the tabs located between the notching part and the cutting part, a is a correction amount required for the cut width, and b is a correction amount required for the position of the tabs.

The electrode plate manufacturing device may further include a sensor configured to sense at least one of the position of the tabs and the cut width.

The processor may be further configured to determine at least one of a determination period, determination targets, a determination ratio, and omission times which determine at least one of the position of the tabs and the cut width based on at least one of a correction degree and a correction interval of the notching part.

The processor may be further configured to determine the omission times based on at least one of a transfer distance of the film and a size of an electrode plate formed from the film.

Embodiments include an electrode plate manufacturing method, including forming one or more tabs on at least a portion of a film using a notching part, cutting the film using a cutting part to have a cut width, and correcting a position of the notching part based on at least one of a position of the tabs on the film and the cut width of the film.

Correcting the position of the notching part may include determining an interval between the tabs on the film from one side of a cut portion of the film based on the position of the tabs, comparing the interval with a preset interval, and correcting the position of the notching part based on the comparing.

Correcting the position of the notching part may include correcting the position of the notching part to be closer to the cutting part when the interval is smaller than the preset interval, and correcting the position of the notching part to move away from the cutting part when the interval is larger than the preset interval.

Correcting the position of the notching part may include comparing the cut width of the film with a preset cut width, and correcting the position of the notching part to be closer to the cutting part when the cut width is smaller than the preset cut width and the position of the notching part to move away from the cutting part when the cut width is larger than the preset cut width.

Correcting the position of the notching part may include setting a direction in which the film is transferred as a reference axis, and correcting the position of the notching part along the reference axis.

Correcting the position of the notching part may include calculating a position correction amount of the notching part according to [Equation 1], and correcting the position of the notching part based on the position correction amount:

[Equation 1]

$$ P = -(n + 1) \times a + b $$

wherein P is the position correction amount of the notching part, n is the number of films formed with the tabs located between the notching part and the cutting part, a is a correction amount required for the cut width, and b represents a correction amount required for the position of the tabs.

BRIEF DESCRIPTION OF THE DRAWINGS

Features will become apparent to those of ordinary skill in the art by describing in detail exemplary embodiments with reference to the attached drawings, in which:

FIGS. 1 to 4 are cross-sectional views schematically illustrating a lithium secondary battery according to one embodiment;
FIG. 5 is a block diagram illustrating components of an electrode plate manufacturing device according to one embodiment;
FIG. 6A and FIG. 6B schematically illustrate the electrode plate manufacturing device and an electrode plate according to one or more embodiments;
FIG. 7A to FIG. 7C illustrate an example of the electrode plate in which errors occur;
FIG. 8 is a flowchart for describing an electrode plate manufacturing method according to one embodiment;
FIG. 9 is an example for definition of each portion of the electrode plate required for describing the electrode plate manufacturing method according to one or more embodiments;
FIG. 10 is a flowchart for describing an example of S103 described with respect to FIG. 8;
FIG. 11 is a flowchart for describing an example of S103 described with respect to FIG. 8;
FIG. 12 is a flowchart for describing an example of S103 described with respect to FIG. 8; and
FIG. 13 schematically illustrates the electrode plates generated according to one or more embodiments.

DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

Hereinafter, preferred embodiments of the present disclosure will be described in detail with reference to the accompanying drawings. Prior to this, the terms and words used in the present specification and claims should not be construed as being limited to their usual or dictionary meanings, and should be interpreted as meanings and concepts consistent with the proposed technical spirit of the present disclosure based on the principle that the inventor may appropriately define the concept of terms to describe his/her invention in the best way. Accordingly, since the embodiments disclosed in the present specification and configurations shown in the drawings are only some of the most preferred embodiments of the present disclosure and do not represent the entire technical spirit of the present disclosure, it should be understood that there are various equivalents and modifications which may replace these at the time of filing the present application. Further, when used in the present specification, "comprise or include" and/or "comprising or including" specify the presence of mentioned shapes, numbers, steps, operations, members, components, and/or groups thereof, and do not exclude the presence or addition of one or more other shapes, numbers, steps, operations, members, components, and/or groups thereof. Further, when the embodiments of the present disclosure are described, "may do" and/or "may be" may include "one or more embodiments of the present disclosure."

Stating that two objects for comparison are 'the same' means that that the two objects are 'substantially the same." Accordingly, 'substantially the same' may include a deviation considered to be a low level in the art, for example, a deviation within 5%. Further, uniformity of a parameter in a certain area may mean uniformity from an average perspective.

Although first, second, and the like are used to describe various components, these components are not limited by these terms. These terms are only used to distinguish one component from another component, and a first component may also be a second component unless otherwise stated.

Throughout the specification, unless otherwise stated, each component may be singular or plural.

Disposition of an arbitrary component at "an upper portion (or a lower portion)" of a component or "on (or under)" the component means that another component may be interposed between the component and the arbitrary component disposed on (or under) the component or the arbitrary component may be disposed in contact with an upper surface (or a lower surface) of the component.

Further, when it is disclosed that a certain component is "connected," "coupled," or "linked" to another component, it should be understood that the components may be directly connected or linked to each other, but another component may be "interposed" between the components, or the components may be "connected," "coupled," or "linked" through another component. In addition, a case in which a certain part is electrically connected to another part includes not only a case in which the parts are directly connected, but also a case in which the parts are connected with another element therebetween.

Throughout the specification, "A and/or B" refers to A, B, or A and B unless otherwise stated. That is, "and/or" includes all or any combination of a plurality of listed items. "C to D" means greater than or equal to C and less than or equal to D unless otherwise specified.

Terms used in the present specifications are provided to describe embodiments of the present disclosure, and are not intended to limit the present disclosure.

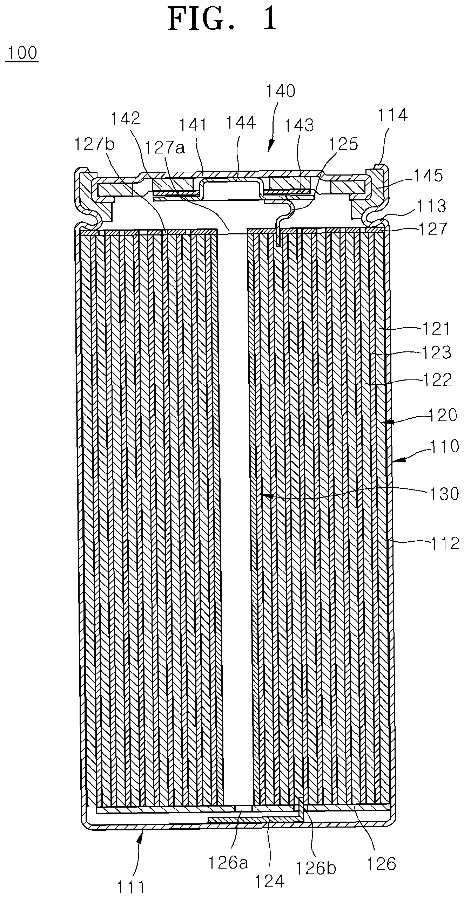

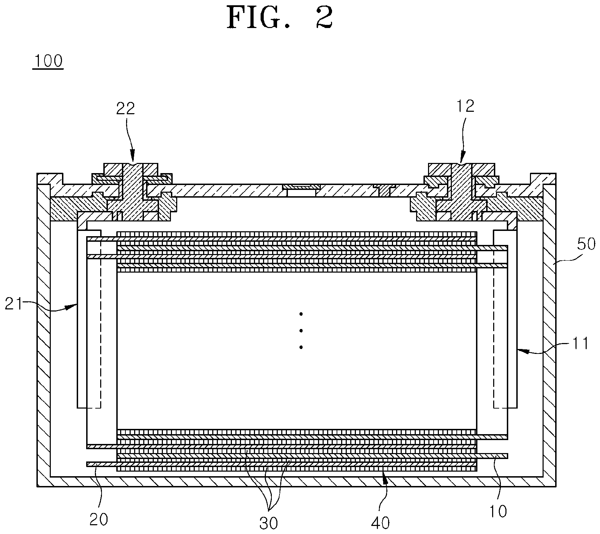

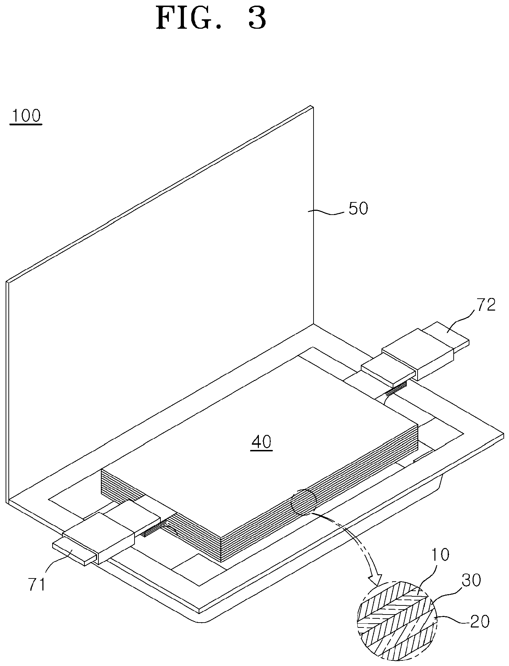

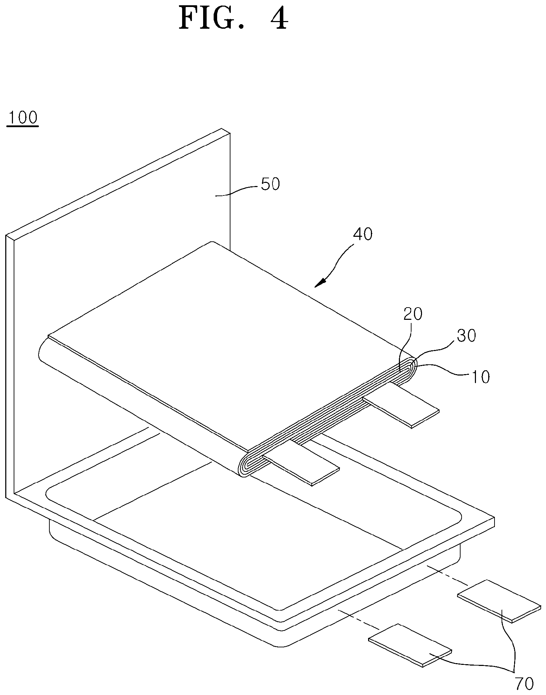

A lithium secondary battery may be classified as a cylindrical shape, a prismatic shape, a pouch shape, a coin shape, or the like according to its shape. FIGS. 1 to 4 are schematic diagrams illustrating a lithium secondary battery according to one embodiment, FIG. 1 may be a cylindrical battery, FIG. 2 may be a prismatic battery, and FIGS. 3 and 4 may be pouch-shaped batteries.

Referring to FIG. 1, a lithium-ion secondary battery 100 (or "secondary battery 100" or "lithium secondary battery 100") may include a cylindrical can 110, an electrode assembly 120, and a cap assembly 140. Further, the cylindrical lithium-ion secondary battery 100 may further include a center pin 130 in some embodiments. In addition, in the secondary battery 100 according to one or more embodiments of the present disclosure, the cap assembly 140 also performs a current interrupt operation, and thus may be referred to as a current interrupt device in some embodiments.

The cylindrical can 110 may include a roughly circular bottom portion 111 and a cylindrical sidewall 112 extending a certain length upward from a circumference of the bottom portion 111. An upper portion of the cylindrical can 110 is open during a manufacturing process of the secondary battery 100. Accordingly, the electrode assembly 120 and the center pin 130 may be inserted into the cylindrical can 110 along with an electrolyte during an assembly process of the secondary battery 100. The cylindrical can 110 may include, for example, steel, stainless steel, aluminum, an aluminum alloy, or equivalents thereof, but other materials are possible.

Further, the cylindrical can 110 may include a beading part 113 recessed inward at a lower portion of the cap assembly 140 and a crimping part 114 bent inward at an upper portion centered on the cap assembly 140 to prevent the cap assembly 140 from being separated to the outside.

The electrode assembly 120 may be accommodated in the cylindrical can 110. The electrode assembly 120 may include a negative electrode plate 121 in which a negative electrode active material (for example, graphite, carbon, or the like) is coated on a negative electrode current collector plate, a positive electrode plate 122 in which a positive electrode active material (for example, a transition metal oxide ($LiCoO_2$, $LiNiO_2$, $LiMn_2O_4$, or the like)) is coated on a positive electrode current collector plate, and a separator 123 located between the negative electrode plate 121 and the positive electrode plate 122 to prevent a short circuit and only allow lithium ions to move. Further, the negative electrode plate 121, the positive electrode plate 122, and the separator 123 may be wound in a roughly cylindrical shape. Here, for example, the negative electrode current collector plate may be manufactured with a copper (Cu) foil, the positive electrode current collector plate may be manufactured with an aluminum (Al) foil, and the separator may be manufactured with polyethylene (PE) or polypropylene (PP), but other materials are possible.

Further, a negative electrode tab 124 protruding and extending a certain length downward may be welded to the negative electrode plate 121, and a positive electrode tab 125 protruding and extending a certain length upward may be welded to the positive electrode plate 122, but the reverse is also possible. In addition, for example, the negative electrode tab 124 may be formed of copper (Cu) or nickel (Ni), and the positive electrode tab 125 may be formed of aluminum (Al), but other materials are possible.

In addition, the negative electrode tab 124 of the electrode assembly 120 may be welded to the bottom portion 111 of the cylindrical can 110. Accordingly, the cylindrical can 110 may operate as a negative electrode. Of course, on the other hand, the positive electrode tab 125 may be welded to the bottom portion 111 of the cylindrical can 110, and in this case, the cylindrical can 110 may operate as a positive electrode.

Further, a first insulating plate 126 coupled to the cylindrical can 110 and formed with a first hole 126a in a center and a second hole 126b at the outside may be interposed between the electrode assembly 120 and the bottom portion 111. The first insulating plate 126 serves to prevent the electrode assembly 120 from being in electrical contact with the bottom portion 111 of the cylindrical can 110. Specifically, the first insulating plate 126 serves to prevent the positive electrode plate 122 of the electrode assembly 120 from being in electrical contact with the bottom portion 111. Here, the first hole 126a serves to allow a gas to quickly move upward through the center pin 130 when a large amount of gas is generated due to an abnormality in the secondary battery, and the second hole 126b serves to allow the negative electrode tab 124 to pass therethrough and be welded to the bottom portion 111.

Further, a second insulating plate 127 coupled to the cylindrical can 110 and formed with a first hole 127a in a center and a plurality of second holes 127b at the outside may be interposed between the electrode assembly 120 and the cap assembly 140. The second insulating plate 127 serves to prevent the electrode assembly 120 from being in electrical contact with the cap assembly 140. Specifically, the second insulating plate 127 serves to prevent the negative electrode plate 121 of the electrode assembly 120 from being in electrical contact with the cap assembly 140. Here, the first hole 127a serves to allow the gas to quickly move to the cap assembly 140 when a large amount of gas is generated due to the abnormality in the secondary battery, and the plurality of second holes 127b serve to allow the positive electrode tab 125 to pass therethrough and be welded to the cap assembly 140. Further, the remaining second holes 127b serve to allow the electrolyte to quickly flow into the electrode assembly 120 during an electrolyte injection process.

In addition, diameters of the first holes 126a and 127a of the first and second insulating plates 126 and 127 are formed to be smaller than a diameter of the center pin 130, and thus prevent the center pin 130 from being in electrical contact with the bottom portion 111 of the cylindrical can 110 or the cap assembly 140 due to an external impact.

The center pin 130 has a circular pipe shape having a hollow and may be coupled to roughly a center of the electrode assembly 120. This center pin 130 may be manufactured with, for example, steel, stainless steel, aluminum, an aluminum alloy, or polybutylene terephthalate, but is not limited thereto. This center pin 130 serves to suppress deformation of the electrode assembly 120 during charging and discharging of the battery and serves as a moving path of a gas generated inside the secondary battery. Of course, in some embodiments, this center pin 130 may be omitted.

The cap assembly 140 may include a top plate 141, a middle plate 142, an insulating plate 143, and a bottom plate 144.

The middle plate 142 may be located under the top plate 141 and have a roughly flat shape.

The insulating plate 143 may be formed in a circular ring shape having a certain width when viewed from below. Further, this insulating plate 143 serves to insulate the middle plate 142 and the bottom plate 144 from each other. The insulating plate 143 may be, for a non-limiting example, interposed between the middle plate 142 and the bottom plate 144 and ultrasonically welded, but other arrangements are possible.

Further, referring to FIG. 2, the lithium secondary battery 100 may include an electrode assembly 40 in which a separator 30 is interposed between a positive electrode 10 and a negative electrode 20, and a case 50 in which the electrode assembly 40 is accommodated. The positive electrode 10, the negative electrode 20, and separator 30 may be impregnated with an electrolyte. The lithium secondary battery 100 may include a positive electrode lead tab 11, a positive electrode terminal 12, a negative electrode lead tab 21, and a negative electrode terminal 22.

Further, referring to FIGS. 3 and 4, the lithium secondary battery 100 may include an electrode assembly 40 in which a separator 30 is interposed between a positive electrode 10 and a negative electrode 20, and a case 50 in which the electrode assembly 40 is embedded. The positive electrode 10, the negative electrode 20, and separator 30 may be impregnated with an electrolyte. The lithium secondary battery 100 may include an electrode tab 70, that is, a positive electrode tab 71 and a negative electrode tab 72 which serve as electrical paths for guiding a current formed in the electrode assembly 40 to the outside.

The lithium secondary battery according to one or more embodiments of the present disclosure may be applied to a vehicle, a mobile phone, various types of electrical devices, and/or the like, but the applications may vary.

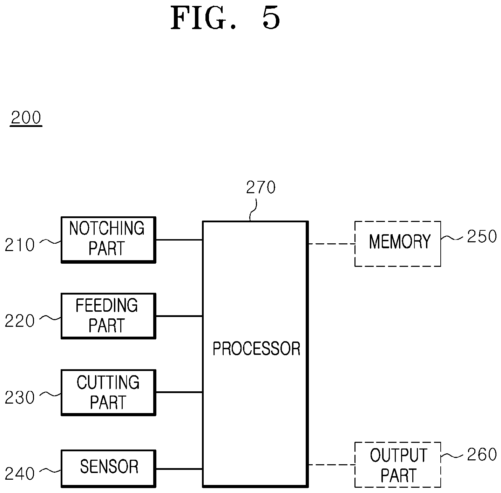

Through FIGS. 1 to 4, schematic components and/or materials of the lithium secondary battery have been described. Through FIGS. 5 to 13 to be described below, a manufacturing method of the lithium secondary battery 100 described in FIGS. 1 to 4 will be described. For a non-limiting example, through FIGS. 5 to 13, a manufacturing method of the electrode plates included in the lithium secondary battery 100 described in FIGS. 1 to 4 will be described.

Meanwhile, the manufacturing device and/or manufacturing method described in FIGS. 5 to 13 may be applied to 1) a feeding part and 2) all manufacturing devices including two or more operations in which a speed is controlled by the feeding part to manufacture objects. However, hereinafter, for convenience of description, a non-limiting example in which the objects are, for example, electrode plates, and two or more operations include, for example, a notching operation and a cutting operation will be described.

FIG. 5 is a block diagram illustrating components of an electrode plate manufacturing device according to one embodiment.

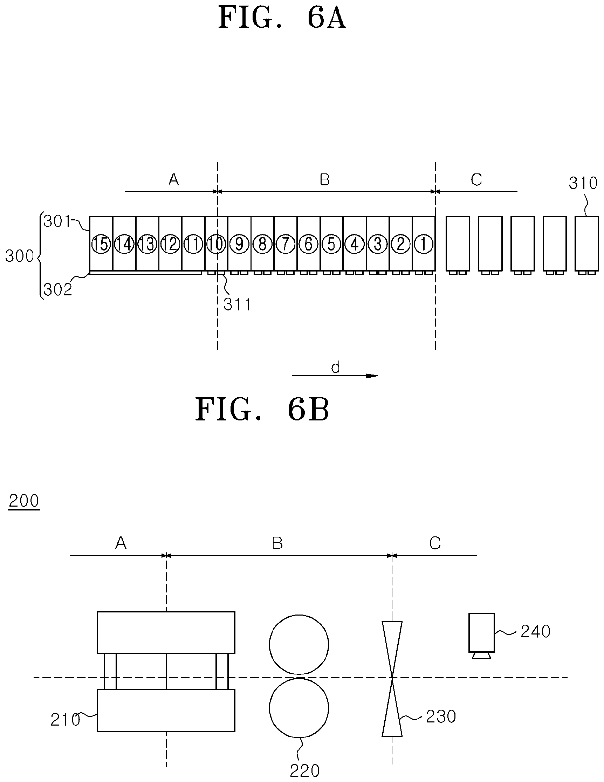

Shown in FIG. 5 is an electrode plate manufacturing device 200 according to one or more embodiments. The electrode plate manufacturing device 200 according to one or more embodiments manufactures electrode plates 310 (for example, see FIGS. 6A to 13) from a film 300 (see, e.g., FIG. 6A).

The electrode plates are, for a non-limiting example, the electrode plates included in the lithium secondary battery 100 described in FIGS. 1 to 4. The electrode plates include, for a non-limiting example, a positive electrode plate and a negative electrode plate. The electrode plates include, for a non-limiting example, the positive electrode 10, the negative electrode 20, the negative electrode plate 121, and/or the positive electrode plate 122 described in FIGS. 1 to 4. The electrode plates include, for a non-limiting example, the negative electrode tab 124 and/or the positive electrode tab 125 described in FIG. 1. The electrode plates include, for a non-limiting example, the positive electrode lead tab 11 and/or the negative electrode lead tab 21 described in FIG. 2. The electrode plates include, for a non-limiting example, the electrode tab 70 (including the positive electrode tab 71 and/or the negative electrode tab 72) described in FIGS. 3 and 4.

Returning to FIG. 5, the electrode plate manufacturing device 200 includes a notching part 210, a feeding part 220, a cutting part 230, and a sensor 240. The electrode plate manufacturing device 200 may further include a memory 250 and/or an output part 260. The electrode plate manufacturing device 200 may further include a processor 270.

Components of the electrode plate manufacturing device 200 are not limited to those shown in FIG. 5 and may include all or only some of the components shown in FIG. 5. Further, the electrode plate manufacturing device 200 may further include components not shown in FIG. 5. For a non-limiting example, the electrode plate manufacturing device 200 may further include a communication part capable of performing wired, wireless, short-distance, or long-distance communication with an external server, a device, or the like.

According to this configuration, the electrode plate manufacturing device 200 according to one embodiment performs notching and cutting.

The notching part 210 forms one or more tabs on at least a portion of the film. The film is in a state before the electrode plate is formed through notching and/or cutting. The tabs are, for a non-limiting example, the positive electrode lead tab 11, the negative electrode lead tab 21, and the electrode tab 70 shown in FIGS. 2 to 4. The notching part 210 notches at least a portion of the film and forms the tabs on at least the portion of the film.

The feeding part 220 transfers the film from the notching part 210 to the cutting part 230. To this end, the feeding part 220 is located between the notching part 210 and the cutting part 230. However, a role or position of the feeding part 220 may vary, and the feeding part 220 may transfer the film from the cutting part 230 to the notching part 210. In this case, an order of operations performed by the cutting part 230 and the notching part 210 on the film is also changed.

The cutting part 230 cuts the film to have a cut width. For a non-limiting example, the cutting part 230 cuts the film into a plurality of sheets by a certain width. The plurality of sheets are, for a non-limiting example, electrode plates formed with one or more tabs on at least portions thereof.

However, the performing order and positions of the notching part 210, the feeding part 220, and the cutting part 230 may vary. For a non-limiting example, the electrode plate manufacturing device 200 may perform operations in an order of the cutting part 230 - the feeding part 220 - the notching part 210. In this case, the notching part 210 forms the tabs on the film cut to have a cut width. Hereinafter, for convenience of description, a non-limiting example in which the electrode plate manufacturing device 200 forms the tabs on the film and then performs the cutting will be described.

The sensor 240 senses all or some of the film and/or the electrode plates. For a non-limiting example, the sensor 240 may sense the position of the tabs formed on the film. In other embodiments, for a non-limiting example, the sensor 240 may sense a cut width of the electrode plate which is formed as the film is cut.

The sensor 240 is, for a non-limiting example, a vision sensor, a proximity sensor, a gyroscope sensor, a motion sensor, an acceleration sensor, a light detection and ranging (LiDAR) sensor, a displacement sensor, a laser sensor, or the like.

The memory 250 stores commands required to drive the electrode plate manufacturing device 200. The commands include, for a non-limiting example, information for the cut width of the film, the position of the tabs formed on the film, an interval between the tabs formed on the film, and the like. The memory 250 stores information acquired in a driving process of the electrode plate manufacturing device 200. The information to be acquired includes, for a non-limiting example, the cut width of the electrode plate sensed by the sensor 240, the position of the tabs sensed by the sensor 240, and the like.

The memory 250 may be embedded in the electrode plate manufacturing device 200. In other embodiments, the memory 250 is located outside the electrode plate manufacturing device 200 and communicates with each of components included in the electrode plate manufacturing device 200 through wired or wireless communication. The memory 250 is, for a non-limiting example, a volatile memory or non-volatile memory. The memory 250 is, for a non-limiting example, a central processing unit (CPU), a cache, a dynamic random access memory (DRAM), a persistent memory, a flash solid state drive (SSD), a hard disk drive (HDD), a compact disc (CD)/digital video disc (DVD), a cloud server, or the like.

The output part 260 outputs an alarm generated from the electrode plate manufacturing device 200. The alarm includes, for a non-limiting example, an error sensed by the sensor 240, a state of at least one of the film, the tabs, and the electrode plates sensed by the sensor 240, and a state of at least one of the components of the electrode plate manufacturing device 200. The output part 260 includes, for a non-limiting example, a display which outputs a visual alarm, a speaker which outputs an auditory alarm, and a haptic module which outputs a tactile alarm. However, the output part 260 may include all types of output parts 260 capable of outputting alarms.

Meanwhile, the electrode plate manufacturing device 200 may further include an input part which inputs a user command. The input part includes, for a non-limiting example, mechanical input parts such as a keyboard and a mouse, and a touch input part such as a touch sensor.

The processor 270 controls all or some of the components included in the electrode plate manufacturing device 200. The processor 270 may be embedded in the electrode plate manufacturing device 200. In other embodiments, the processor 270 may be located outside the electrode plate manufacturing device 200 and control each of the components included in the electrode plate manufacturing device 200 through the wired or wireless communication.

The processor 270 corrects a position of the notching part 210 based on at least one of, for a non-limiting example, the position of the tabs formed on the film and/or the cut width of the film.

The processor 270 is, for a non-limiting example, a central processing unit (CPU), a microprocessor unit (MPU), a microcontroller unit (MCU), a graphics processing unit (GPU), a digital signal processor (DSP), a floating-point unit (FPU), an application specific integrated circuit (ASIC), or a field programmable gate array (FPGA).

According to this configuration, the electrode plate manufacturing device 200 may control the position of the notching part 210 and/or minimize the number of electrode plates in which errors occur, and correct the position of the notching part 210 to reduce the errors formed in the electrode plates.

Hereinafter, a driving method of this electrode plate manufacturing device 200 will be described in detail.

FIG. 6A and FIG. 6B are a view schematically illustrating the electrode plate manufacturing device and the electrode plates according to one or more embodiments.

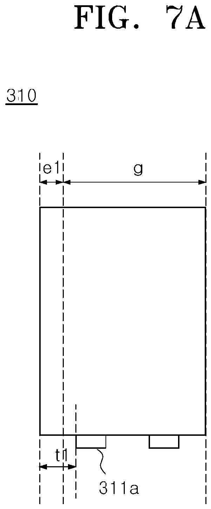

FIG. 7A to FIG. 7C are a view illustrating a non-limiting example of the electrode plates in which errors occur.

FIG. 6A illustrates a film 300 for forming the electrode plates 310.

The film 300 includes a base material and an active material formed on at least a portion of at least one surface of the base material. In this case, the active material is formed on the base material by, for a non-limiting example, a wet method of being coated on the base material in the form of a slurry. In other embodiments, the active material is formed on the base material by, for a non-limiting example, a dry method of being attached to the base material in the form of a sheet.

The film 300 includes a coated portion 301 in which the active material is formed on the base material and an uncoated portion 302 in which the active material is not formed on the base material.

FIG. 6B illustrates an electrode plate manufacturing device 200 according to one or more embodiments.

The electrode plate manufacturing device 200 according to one or more embodiments is, for a non-limiting example, the electrode plate manufacturing device 200 described in FIG. 5, and includes a notching part 210, a feeding part 220, and a cutting part 230. Further, the electrode plate manufacturing device 200 may further include a sensor 240.

Hereinafter, through FIGS. 6A and 6B, driving of the electrode plate manufacturing device 200 will be described.

The film 300 moves in an installation direction d of the electrode plate manufacturing device 200. In FIG. 6A, A represents the film 300 before the tabs are formed by the notching part 210.

The notching part 210 forms one or more tabs 311 on at least a portion of at least one surface of the film 300. The feeding part 220 transfers the film 300 from the notching part 210 to the cutting part 230. In FIG. 6A, B represents a film in which the tabs 311 are formed on at least the portion of at least one surface of the film 300 by the notching part 210. Further, B represents a film transferred from the notching part 210 to the cutting part 230 by the feeding part 220 after the tabs 311 are formed.

The cutting part 230 cuts the film 300 by a certain width to form the electrode plate 310 having a cut width. In FIG. 6A, C represents the electrode plate 310 having the cut width.

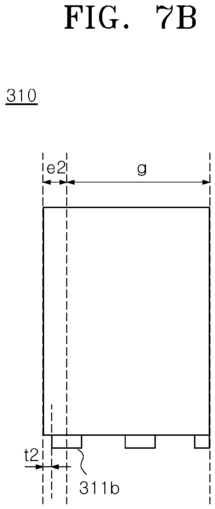

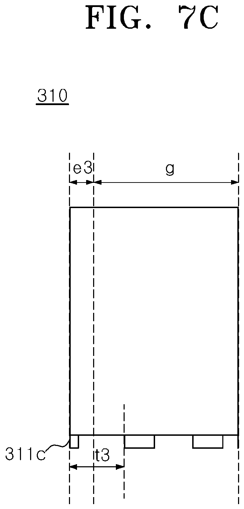

Thus, the film 300 is cut into the electrode plates 310 while being transferred along the components of the electrode plate manufacturing device 200. In this case, the electrode plate manufacturing device 200 further includes the sensor 240 which checks whether the film 300 is formed of the electrode plates 310 in a preset shape. The electrode plates 310 measured by the sensor 240 may be the electrode plates 310 of a shape the same as or similar to the preset shape. In this case, the electrode plates 310 of the shape similar to the preset shape are not the same as the electrode plates of the preset shape, but are electrode plates having a shape within an error range capable of exhibiting an effect within the same or similar range as the electrode plates of the preset shape. However, the electrode plates 310 measured by the sensor 240 may be different from the preset shape. For a non-limiting example, the electrode plates 310 measured by the sensor 240 may be the same as in FIGS. 7A to 7C. For a non-limiting example, as shown in FIGS. 7A to 7C, the electrode plates 310 may have cut widths, for example, g+e1, g+e2, and g+e3, which are different from a certain width (g). In other embodiments, for example, the tabs 311a of the electrode plates 310 may be located at positions t1, t2, and t3 away from one surface of the electrode plates 310 rather than at certain positions. Accordingly, the electrode plates 310 may be formed so that the tabs 311a are located too far from one surface as shown in FIG. 7A, tabs 311b are located too close to the surface as shown in FIG. 7B, or tabs 311c are cut as shown in FIG. 7C. In other embodiments, the electrode plates 310 may be, for example, formed with a preset number of tabs 311 or more as shown in FIGS. 7B and 7C.

Thus, in order to minimize the number of electrode plates 310 incorrectly formed due to error(s), the electrode plates 310 are discovered as being formed differently from the design, and in order to prevent the errors which contributed to forming of these electrode plates from accumulating, correcting the errors is required. Hereinafter, a method in which the electrode plate manufacturing device 200 is driven to correct the errors occurring in the electrode plates 310 according to the processor 270 described in FIG. 5 will be described.

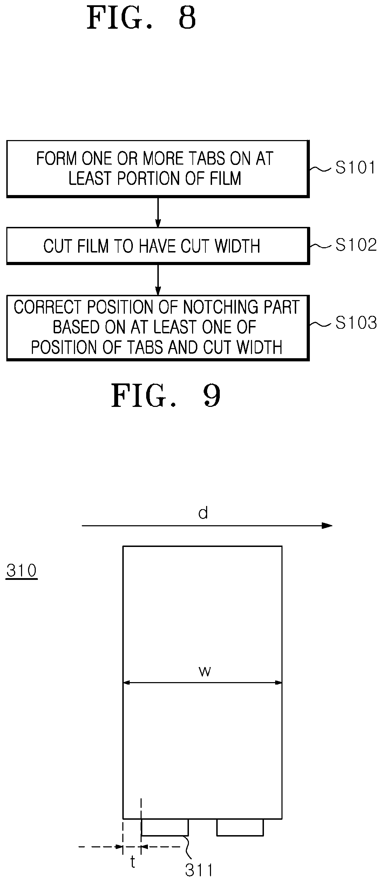

FIG. 8 is a flowchart for describing an electrode plate manufacturing method according to one or more embodiments.

FIG. 9 is a non-limiting example for definition of each portion of the electrode plate required for describing the electrode plate manufacturing method according to one or more embodiments.

As shown in FIG. 8, the electrode plate manufacturing device 200 performs operation S101 of forming one or more tabs 311 on at least the portion of the film 300.

As described with respect to FIGS. 5 to 7C, the notching part 210 forms one or more tabs 311 on at least the portion of the at least one surface of the film 300. For a non-limiting example, the notching part 210 may form two tabs 311 having a certain interval (for example, a first interval) on the film 300 for each certain period (for example, a first period). In this case, the at least one surface of the film 300 is, for a non-limiting example, the uncoated portion 302. Further, for a non-limiting example, the notching part 210 may form the tabs 311 at positions having a certain interval (for example, a second interval, the second interval being the same as or different from the first interval) from a cut surface generated by S102.

As shown in FIG. 8, the electrode plate manufacturing device 200 performs operation S102 of cutting the film 300 to have a cut width.

As described in FIGS. 5 to 7, the cutting part 230 cuts the film 300 transferred by the feeding part 220 to have the cut width. For a non-limiting example, the cutting part 230 cuts the film 300 to have the cut width for each certain period (for example, a second period, the second period being the same as or different from the first period). The cut width has a length, for a non-limiting example, including all of one or more tabs 311 formed during the first period. Further, the cut width has a length, for a non-limiting example, the same as a width of the electrode plate 310 to be manufactured through the electrode plate manufacturing device 200. Accordingly, the electrode plate manufacturing device 200 according to one or more embodiments manufactures the electrode plates 310.

As shown in FIG. 8, the electrode plate manufacturing device 200 performs operation S103 of correcting the position of the notching part 210 based on at least one position of the tabs and the cut width.

The sensor 240 senses at least one position of the tabs and the cut width of the electrode plate 310 manufactured by the electrode plate manufacturing device 200. The position of the tabs is a position of the tabs 311 formed on the electrode plate 310. For a non-limiting example, in FIG. 9, the tabs 311 were formed at a position having an interval t from one side of the cut portion of the film. The cut width is a width of the electrode plate 310. As shown in FIG. 9, the width of the electrode plate 310 is, for a non-limiting example, a length of the electrode plate 310 in the direction d in which the electrode plate 310 is transferred. For a non-limiting example, in FIG. 9, the tabs 311 have a cut width w.

The processor 270 calculates a correction degree required for the electrode plates 310 based on at least one of the position of the tabs and the cut width.

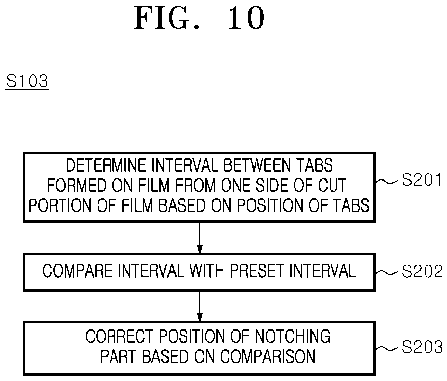

A method of calculating the correction degree will be described in more detail through non-limiting examples in FIGS. 10 to 12.

The processor 270 sets the direction d in which the film is transferred as a reference axis. The processor 270 corrects the position of the notching part 210 along the reference axis by the calculated correction degree. The position of the notching part 210 is changed according to correction by the processor 270. Accordingly, the electrode plate manufacturing device 200 according to one or more embodiments may form the electrode plates while minimizing the number of electrode plates in which errors occur.

Meanwhile, the notching part 210 includes a mold which performs notching (for example, an upper mold which performs notching) and a support which supports the mold (for example, a lower mold which is connected to the upper mold and supports the upper mold from, for example, a lower portion so that the upper mold performs the notching). The processor 270 may correct a position of the mold based on the correction degree. For a non-limiting example, the processor 270 may correct the position of the mold when it is determined that the correction degree corresponds to a degree which may be corrected as the position of the mold is corrected. In other embodiments, the processor 270 may correct the position of the notching part 210 including the mold and the support based on the correction degree. For a non-limiting example, the processor 270 may correct the position of the notching part 210 including the mold and the support when it is determined that the correction degree does not correspond to the degree which may be corrected as the position of the mold is corrected and correction beyond correcting the position of the mold is required. Meanwhile, when the position correction of the notching part 210 including the mold and the support is not performed by the processor 270, the processor 270 may output necessity of the position correction of the notching part 210 through the output part 260. In this case, the output part 260 outputs the degree to which the position correction of the notching part 210 is required and the direction in which the position correction is required. Accordingly, the electrode plate manufacturing device 200 according to one or more embodiments may efficiently control each of the components to minimize the number of electrode plates in which the errors occur.

Meanwhile, the processor 270 determines at least one of a determination period, a number of determination targets, a determination ratio, and omission times which determines at least one of the position of the tabs and the cut width based on at least one of a correction degree and a correction interval of the notching part 210.

The correction degree of the notching part 210 is a degree of correcting the position of the notching part 210 described above. For a non-limiting example, the correction degree of the notching part 210 may be a distance of moving to one side or the other side along the reference axis. The correction interval of the notching part 210 is a period of correcting the position of the notching part 210. For a non-limiting example, the correction interval may be constant, decrease, increase, or change with no particular trend.

The determination period is a period in which the processor 270 determines the correction degree based on the position of the tabs 311 and/or cut width. For a non-limiting example, when the correction interval increases, the processor 270 may increase the determination period in proportion to the correction interval. In other embodiments, for a non-limiting example, when the correction interval decreases, the processor 270 may reduce the determination period in proportion to the correction interval.

The number of targets to be determined is the number of electrode plates 310 determined by the processor 270 to determine the correction degree of the notching part 210. For a non-limiting example, the processor 270 senses the position of the tabs 311 and/or the cut width of twenty electrode plates 310, and then determines the correction degree of the notching part 210 from an average of the errors occurring in the twenty electrode plates 310. The number of targets to be determined may be, for a non-limiting example, proportional to the determination period.

The determination ratio is a ratio of an amount of actually performing a correction operation to an amount of the correction degree calculated by the processor 270. For a non-limiting example, when a calculated value of the correction amount is 1 mm and the determination ratio is 30%, an actual correction operation is performed by only 0.3 mm, which is 30% of 1 mm.

The omission times are a quantity of ignoring a measured value. The omission times are necessary when a sending position and a process (notching or cutting) position are different. In this case, the measured value greater than or equal to a quantity of electrode plates between at least two positions should be excluded from data from which a next correction degree is calculated. This is because a unit plate on which a process already has been performed under a pre-correction condition is present between the sensing position and the process at a time at which the correction occurs. The processor 270 should determine a next correction amount only for the electrode plates 310 made under a changed process condition after feedback is performed. Further, since initial data sensed from the electrode plates 310 made immediately after the process condition is changed may temporarily represent overshoot or undershoot, and the omission times may be added according to properties of the process and sensing value.

In this case, the processor 270 determines the omission times based on at least one of a transfer distance of the film 300 and a size of the electrode plate 310 formed from the film 300.

With this very advantageous configuration, the electrode plate manufacturing device 200 according to one or more embodiments may provide the most efficient method of reducing the errors occurring in the electrode plates 310 and minimizing the number of electrode plates 310 in which the errors occur.

Through FIGS. 10 to 12 to be described below, a method of determining the degree to which the processor 270 corrects the position of the notching part 210 will be described.

FIG. 10 is a flowchart for describing a non-limiting example of S103 described in FIG. 8.

As described in FIGS. 5 to 9, the processor 270 corrects the position of the notching part 210 based on the position of the tabs 311. Through FIG. 10, a a non-limiting example of a driving process of the processor 270 will be described.

As shown in FIG. 10, the electrode plate manufacturing device 200 according to one or more embodiments performs operation S201 of determining an interval between the tabs formed on the film from one side of the cut portion of the film based on the position of the tabs.

The interval is a length between the tabs 311 and the cut surface of the film 300. In this case, the tabs 311 are tabs formed by the notching part 210. Further, the cut surface of the film 300 is a surface formed when the film 300 is cut by the cutting part 230. The length between the tabs 311 and the cut surface of the film 300 is a length between the tab 311 located closest to one electrode plate 310 and the cut surface. Specifically, the interval is the shortest distance between a line extending parallel to the cut surface from one surface of the tab 311 located closest to the cut surface and the cut surface. For example, the interval is t shown in FIG. 9.

The processor 270 determines the interval based on the position of the tabs 311, the position of the cut surface of the electrode plate 310, or information on the electrode plate 310 itself.

As shown in FIG. 10, the electrode plate manufacturing device 200 according to one or more embodiments performs operation S202 of comparing the determined interval with a preset interval.

The preset interval is an interval pre-stored in the memory 250 or received by the electrode plate manufacturing device 200 from the outside through a communication part or an input part. The preset interval is an interval between a target cut surface of the electrode plate 310 and the tabs 311.

The processor 270 compares the interval determined in S201 with the preset interval. For a non-limiting example, the processor 270 compares values of the interval and the preset interval. In other embodiments, for a non-limiting example, the processor 270 compares an image acquired from the manufactured electrode plate including the interval and a target image (pre-stored image) of the electrode plate. When it is determined that the interval is the same as the preset interval or belongs to the same range as the preset interval, the processor 270 does not correct the position of the notching part 210. In this case, the same range as the preset interval corresponds to a range which is not the same as the preset interval but is not determined as an error. When it is determined that the interval does not belong to the same range as the preset interval, the processor 270 performs S203.

As shown in FIG. 10, the electrode plate manufacturing device 200 according to one or more embodiments performs operation S203 of correcting the position of the notching part 210 based on the comparison.

When it is determined that the interval does not belong to the same range as the preset interval, the processor 270 calculates a correction degree to which the position of the notching part 210 should be corrected. The processor 270 moves (corrects) the position of the notching part 210 according to the calculated correction degree. In this case, as described above, for a non-limiting example, the processor 270 makes the notching part 210 move along the reference axis. Accordingly, the notching part 210 is corrected to be closer to or farther away from the cutting part 230 in a transfer direction of the film 300. For a non-limiting example, when (or if) it is determined that the interval is smaller than the preset interval, the processor 270 corrects the position of the notching part 210 to be closer to the cutting part 230. For a non-limiting example, when it is determined that the interval is larger than the preset interval, the processor 270 corrects the position of the notching part 210 to move away from the cutting part 230.

According to this advantageous method, the electrode plate manufacturing device 200 according to one or more embodiments may provide the most efficient method of reducing the errors occurring in the electrode plates 310 and minimizing the number of electrode plates 310 in which the errors occur.

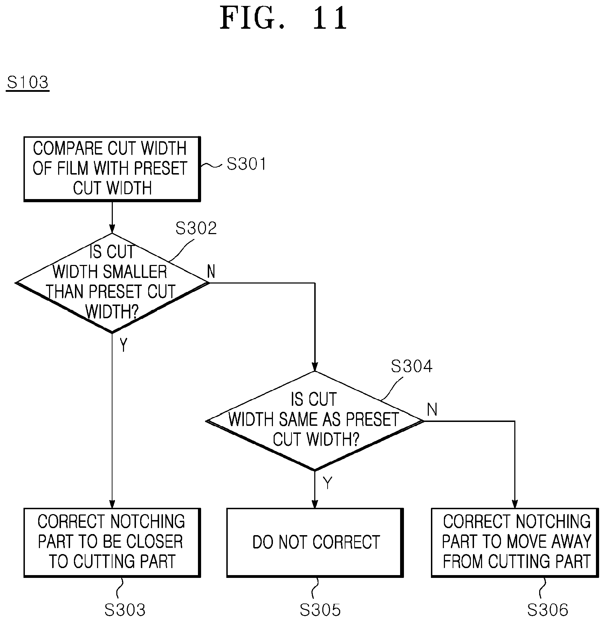

FIG. 11 is a flowchart for describing a non-limiting example of S103 described in FIG. 8.

As described in FIGS. 5 to 9, the processor 270 corrects the position of the notching part 210 based on the cut width. Through FIG. 11, a non-limiting example of a driving process of the processor 270 will be described.

As shown in FIG. 11, the electrode plate manufacturing device 200 according to one embodiment performs operation S301 of comparing the cut width of the film with a preset cut width.

The cut width is a length of the electrode plate 310 for a moving direction of the film 300. Specifically, the cut width is the shortest distance between the cut surface of one surface and the cut surface of the other surface of the electrode plate 310. In this case, the one surface and the other surface of the electrode plate 310 face each other. For a non-limiting example, the cut width is w shown in FIG. 9.

The preset cut width is a width pre-stored in the memory 250 or received by the electrode plate manufacturing device 200 from the outside through the communication part or input part. The preset cut width is a target width of the electrode plate 310.

The processor 270 compares the cut width with the preset cut width. For a non-limiting example, the processor 270 compares values of the cut width and the preset cut width. In other embodiments, for a non-limiting example, the processor 270 compares an image acquired from the manufactured electrode plate including the cut width with a target image (pre-stored image) of the electrode plate.

As shown in FIG. 11, the electrode plate manufacturing device 200 according to one embodiment performs operation S302 of determining whether the cut width is smaller than the preset cut width.

The processor 270 determines whether the cut width is smaller than the same range as the preset cut width. In this case, the same range as the preset cut width is not the same as the preset cut width, but corresponds to a range in which the difference is not determined as an error.

As shown in FIG. 11, when it is determined that the cut width is smaller than the preset cut width, the electrode plate manufacturing device 200 according to one or more embodiments performs operation S303 of correcting the notching part 210 to be closer to the cutting part 230.

When it is determined that the cut width is smaller than the preset cut width or within a same range as the preset cut width, the processor 270 corrects the notching part 210 to be closer to the cutting part 230 along the reference axis.

As shown in FIG. 11, when it is determined that the cut width is not smaller than the preset cut width, the electrode plate manufacturing device 200 according to one or more embodiments performs operation S304 of determining whether the cut width and the preset cut width are the same or correspond to the same range.

As shown in FIG. 11, when it is determined that the cut width and the preset cut width are the same or correspond to the same range, the electrode plate manufacturing device 200 according to one or more embodiments performs operation S305 of not correcting the position of the notching part 210.

As shown in FIG. 11, when it is determined that the cut width is larger than the preset cut width, the electrode plate manufacturing device 200 according to one embodiment performs operation S306 of correcting the notching part 210 to move away from the cutting part 230.

When it is determined that the cut width is larger than the preset cut width or in the same range as the preset cut width, the processor 270 corrects the notching part 210 to move away from the cutting part 230.

According to this advantageous method, the electrode plate manufacturing device 200 according to one or more embodiments may provide the most efficient method of reducing the errors occurring in the electrode plates 310 and minimizing the number of electrode plates 310 in which the errors occur.

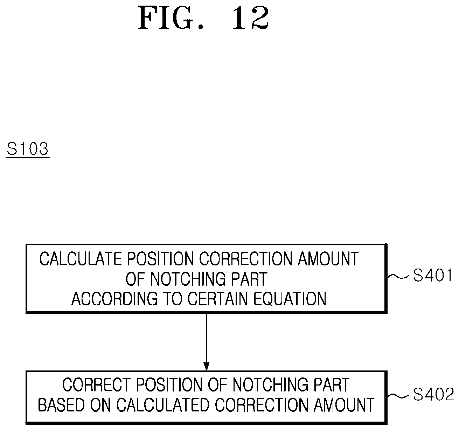

FIG. 12 is a flowchart for describing an example of S103 described in FIG. 8.

As described in FIGS. 5 to 11, the processor 270 corrects the position of the notching part 210 based on the position of the tabs 311 and the cut width. Through FIG. 12, a non-limiting example of a driving process of the processor 270 will be described.

As shown in FIG. 12, the electrode plate manufacturing device 200 according to one or more embodiments performs operation S401 of calculating a position correction amount of the notching part according to a certain equation.

The processor 270 calculates the position correction amount of the notching part 210 according to the certain equation using the position of the tabs 311 and the cut width as variables. In this case, the position correction amount of the notching part 210 is the same as or similar to the correction degree (of the position) of the notching part 210 described above. The certain equation is, for example, [Equation 1] below.

[Equation 1]

$$P = -(n + 1) \times a + b$$

In this case, P represents the position correction amount of the notching part 210. A sign of P represents a position correction direction of the notching part 210. For example, when P is 0, the position of the notching part 210 is not corrected. For example, when P is larger than 0, the notching part 210 is corrected to be closer to the cutting part 230 along the reference axis. For example, when P is smaller than 0, the notching part 210 is corrected away from the cutting part 230 along the reference axis. In the equation, n represents the number of tabs 311 formed to be located between the notching part 210 and the cutting part 230. That is, n (an integer greater than or equal to zero) is the number of preliminary electrode plates which have already been notched by the notching part 210 and have been formed with the tabs 311, but have not yet been cut by the cutting part 230 and thus are not formed as the electrode plates 310. Accordingly, n is the number of preliminary electrode plates which have not yet become the electrode plates 310 and thus may not be counted, but will be formed as the electrode plates when the film 300 is cut according to the cut width. For a non-limiting example, in FIG. 6, n is the number of preliminary electrode plates corresponding to numbers 1 to 10, and is 10. In the equation, a is the correction amount required for the cut width, and b is the correction amount required for the position of the tabs 311. The correction amount required for the position of the tabs is specifically the correction amount required for the interval described in FIG. 10 (for example, t in FIG. 9). Hereinafter, the correction amount required for the interval and the correction amount required for the position of the tabs may be interchangeably used.

For a non-limiting example, the number of electrode plates which have already been notched but are not yet cut may be 10, the correction amount required for the cut width may be +0.1 mm, and the correction amount required for the interval may be +0.01 mm. In this case, for example, a position correction amount P of n required for the notching part 210 is -1.09.

As shown in FIG. 12, the electrode plate manufacturing device 200 according to one or more embodiments performs operation S402 of correcting the position of the notching part 210 based on the calculated correction amount.

For a non-limiting example, the processor 270 corrects (moves) the notching part 210 1.09 mm away from the cutting part 230 along the reference axis.

As described in FIGS. 10 to 12, the electrode plate manufacturing device 200 may calculate the correction degree of the position of the notching part 210 based on the position of the tabs, the cut width, or both the position of the tabs and the cut width, and correct the position of the notching part 210 according to the correction degree. Further, [Equation 1] described with respect to FIG. 12 may be applied to calculate the correction degree not only when both the position of the tabs and the cut width are considered but also when either the position of the tabs or the cut width is considered.

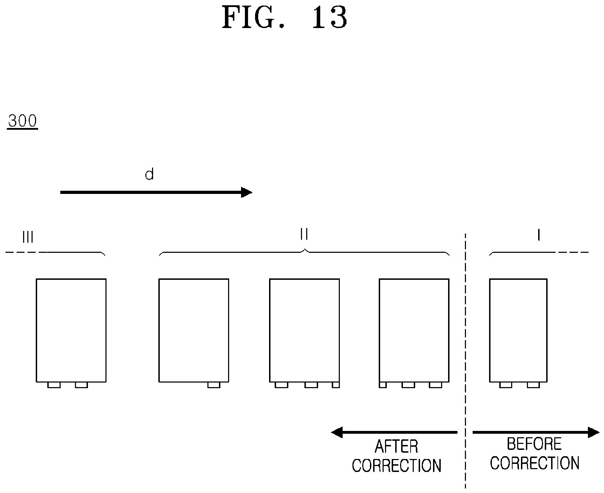

FIG. 13 is a view schematically illustrating the electrode plates generated according to one or more embodiments.

Through FIGS. 5 to 12, the manufacturing method of the electrode plates 310 has been described. Through FIG. 13, a case in which the electrode plates 310 are manufactured according to one or more embodiments will be described through examples. In FIG. 13, I represents a region where the electrode plates 310 are formed as notching and cutting are completed by the electrode plate manufacturing device 200 according to one or more embodiments. In this case, I is a region where the electrode plates sensed by the sensor 240 are present, and corresponds to a region where the position of the notching part 210 is not yet corrected by the processor 270. II represents a region where the notching has been completed and the tabs have been formed, but the cutting is not yet performed. FIG. 13 illustrates II as a state in which the electrode plates are formed after the cutting, but this is exaggerated for convenience of description, and II is a region where the film 300 formed with the tabs is located. In this case, II corresponds to a region where the position of the notching part 210 has been corrected by the processor 270, but the preliminary electrode plates formed with the tabs 311 before correction of the position of the notching part 210 are present. III corresponds to a region where the preliminary electrode plates formed with the tabs 311 after correction of the position of the notching part 210 are present.

As described in FIG. 13, the electrode plate manufacturing device 200 or the electrode plate manufacturing method according to one embodiment provides an advantageous way of minimizing the number of electrode plates in which there are errors generated due to accumulation of the errors of a change in feeding amount, even when the notching part 210 and the cutting part 230 are disposed in series while sharing one feeding part 220. Thus, one or more embodiments may help users manufacture electrode plates and/or minimize wasted costs due to occurrence of errors.

The positive electrode and/or the negative electrode includes tabs on at least a portion of a film to provide a moving path of electrons. For a non-limiting example, the positive electrode and/or the negative electrode is electrically connected to an electrode terminal through the tabs. For a non-limiting example, the tabs are formed through a notching operation. The positive electrode and/or the negative electrode may undergo a cutting operation to be formed in the form of a sheet.

Meanwhile, recently, in order to quickly and easily form an electrode plate, equipment capable of performing both notching and cutting has been proposed.

An electrode plate manufacturing device and/or electrode plate manufacturing method according to one or more embodiments can represent a method of performing notching and cutting.

An electrode plate manufacturing device and/or electrode plate manufacturing method according to one or more embodiments can correct errors occurring while notching and/or cutting is performed.

An electrode plate manufacturing device and/or electrode plate manufacturing method according to one or more embodiments can minimize the number of electrode plates generated by errors occurring while notching and/or cutting is performed.

However, effects which may be acquired through the present disclosure are not limited to the above-described effects, and other technical effects which are not mentioned will be clearly understood by those skilled in the art from the description of the disclosure disclosed herein.

Although preferred embodiments of the present disclosure have been described above, the present disclosure is not limited thereto, and may be variously modified within the scope of the claims, the detailed description of the disclosure, and the accompanying drawings, and this may also belong to the scope of the present disclosure.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

**Claims**

1. An electrode plate manufacturing device, comprising:

    a notching part (210) configured to form one or more tabs (311) on at least a portion of a film (300);
    a cutting part (230) configured to cut the film (300) to have a cut width;
    a feeding part (220) configured to transfer the film (300) from the notching part (210) to the cutting part (230); and
    a processor (270) configured to correct a position of the notching part (210) based on at least one of a position of the tabs (311) formed on the film (300) and the cut width of the film (300).

2. The electrode plate manufacturing device as claimed in claim 1, wherein the processor (270) is further configured to:

determine an interval between the tabs (311) formed on the film (300) from one side of a cut portion of the film (300) based on the position of the tabs, resulting in a determined interval, compare the determined interval with a preset interval, and
correct the position of the notching part (210) based on the determined interval and the preset interval.

3. The electrode plate manufacturing device as claimed in claim 2, wherein:

if the determined interval is smaller than the preset interval, the position of the notching part (210) is corrected to be closer to the cutting part (230); and
if the determined interval is larger than the preset interval, the position of the notching part (210) is corrected to move away from the cutting part (230).

4. The electrode plate manufacturing device according to any one of the preceding claims, wherein the processor (270) is further configured to:

compare the cut width of the film (300) with a preset cut width,
correct the position of the notching part (210) to be closer to the cutting part (230) if the cut width is smaller than the preset cut width, and
correct the position of the notching part (210) to move away from the cutting part (230) when the cut width is larger than the preset cut width.

5. The electrode plate manufacturing device according to any one of the preceding claims, wherein the processor (270) is further configured to:

set a direction in which the film (300) is transferred as a reference axis, and
correct the position of the notching part (210) along the reference axis.

6. The electrode plate manufacturing device according to any one of the preceding claims, wherein the processor (270) is further configured to calculate a position correction amount of the notching part (210) according to [Equation 1] and correct the position of the notching part (210) based on the position correction amount:

[Equation 1]

$$P = -(n + 1) \times a + b$$

wherein P is the position correction amount of the notching part, n is a number of films (300) formed with the tabs (311) located between the notching part (210) and the cutting part, a is a correction amount required for the cut width, and b is a correction amount required for the position of the tabs (311).

7. The electrode plate manufacturing device according to any one of the preceding claims, further comprising a sensor configured to sense at least one of the position of the tabs (311) and the cut width.

8. The electrode plate manufacturing device according to any one of the preceding claims, wherein the processor (270) is further configured to determine at least one of a determination period, a number of determination targets, a determination ratio, and omission times which determine at least one of the position of the tabs (311) and the cut width based on at least one of a correction degree and a correction interval of the notching part (210).

9. The electrode plate manufacturing device as claimed in claim 8, wherein the processor (270) is further configured to determine the omission times based on at least one of a transfer distance of the film (300) and a size of an electrode plate formed from the film (300).

10. An electrode plate manufacturing method, comprising:

forming one or more tabs (311) on at least a portion of a film (300) using a notching part (210);
cutting the film (300) using a cutting part (230) to have a cut width; and
correcting a position of the notching part (210) based on at least one of a position of the tabs (311) on the film and the cut width of the film (300).

11. The electrode plate manufacturing method as claimed in claim 10, wherein correcting the position of the notching part (210) includes:

determining an interval between the tabs (311) on the film (300) from one side of a cut portion of the film (300) based on the position of the tabs (311);
comparing the interval with a preset interval; and
correcting the position of the notching part (210) based on the comparing.

12. The electrode plate manufacturing method as claimed in claim 11, wherein:

correcting the position of the notching part (210) includes correcting the position of the notching part (210) to be closer to the cutting part (230) when the interval is smaller than the preset interval, and
correcting the position of the notching part (210) to move away from the cutting part (230) when the interval is larger than the preset interval.

13. The electrode plate manufacturing method according to any one of the claims 10 to 12, wherein correcting the position of the notching part (210) includes:

    comparing the cut width of the film (300) with a preset cut width; and
    correcting the position of the notching part (210) to be closer to the cutting part (230) when the cut width is smaller than the preset cut width and the position of the notching part (210) to move away from the cutting part (230) when the cut width is larger than the preset cut width.

14. The electrode plate manufacturing method according to any one of the claims 10 to 13, wherein correcting the position of the notching part (210) includes:

    setting a direction in which the film (300) is transferred as a reference axis; and
    correcting the position of the notching part (210) along the reference axis.

15. The electrode plate manufacturing method according to any one of the claims 10 to 14, wherein correcting the position of the notching part (210) includes:

    calculating a position correction amount of the notching part (210) according to [Equation 1]; and
    correcting the position of the notching part (210) based on the position correction amount:

    [Equation 1]

    $$P = -(n + 1) \times a + b$$

    wherein P is the position correction amount of the notching part, n is the number of films (300) formed with the tabs (311) located between the notching part (210) and the cutting part, a is a correction amount required for the cut width, and b represents a correction amount required for the position of the tabs (311).

# FIG. 1

100

# FIG. 2

<u>100</u>

# FIG. 3

# FIG. 4

100

# FIG. 5

200

# FIG. 6A

# FIG. 6B

# FIG. 7A

<u>310</u>

# FIG. 7B

310

# FIG. 7C

310

# FIG. 8

```
┌─────────────────────────────────┐
│  FORM ONE OR MORE TABS ON AT     │ ～S101
│  LEAST PORTION OF FILM           │
└─────────────────────────────────┘
              │
              ▼
┌─────────────────────────────────┐
│  CUT FILM TO HAVE CUT WIDTH      │ ～S102
└─────────────────────────────────┘
              │
              ▼
┌─────────────────────────────────┐
│  CORRECT POSITION OF NOTCHING PART│ ～S103
│  BASED ON AT LEAST ONE OF        │
│  POSITION OF TABS AND CUT WIDTH  │
└─────────────────────────────────┘
```

# FIG. 9

310

d

w

t

311

# FIG. 10

S103

| DETERMINE INTERVAL BETWEEN TABS FORMED ON FILM FROM ONE SIDE OF CUT PORTION OF FILM BASED ON POSITION OF TABS | ~S201 |
|---|---|

↓

| COMPARE INTERVAL WITH PRESET INTERVAL | ~S202 |
|---|---|

↓

| CORRECT POSITION OF NOTCHING PART BASED ON COMPARISON | ~S203 |
|---|---|

# FIG. 11

S103

COMPARE CUT WIDTH
OF FILM WITH PRESET
CUT WIDTH — S301

IS CUT
WIDTH SMALLER
THAN PRESET CUT
WIDTH? — S302

N

Y

IS CUT
WIDTH SAME AS PRESET
CUT WIDTH? — S304

N

Y

CORRECT NOTCHING
PART TO BE CLOSER
TO CUTTING PART

S303

DO NOT CORRECT

S305

CORRECT NOTCHING
PART TO MOVE AWAY
FROM CUTTING PART

S306

# FIG. 12

S103

CALCULATE POSITION CORRECTION AMOUNT
OF NOTCHING PART
ACCORDING TO CERTAIN EQUATION — S401

CORRECT POSITION OF NOTCHING PART
BASED ON CALCULATED CORRECTION AMOUNT — S402

# FIG. 13

Europäisches
Patentamt

European
Patent Office

Office européen
des brevets

# EUROPEAN SEARCH REPORT

**Application Number**

EP 25 16 7689

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 2015 0004557 A (MPLUS CORP [KR]) 13 January 2015 (2015-01-13) | 1,5-10, 14,15 | INV. B26D5/00 B26D5/32 |
| A | * paragraph [0033] - paragraph [0038]; figures * | 2-4, 11-13 | B26D9/00 B26F1/38 |

- - - - -

**TECHNICAL FIELDS SEARCHED (IPC)**

B26D
B26F

The present search report has been drawn up for all claims

| Place of search | Date of completion of the search | Examiner |
|---|---|---|
| Munich | 28 July 2025 | Canelas, Rui |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

                                                                
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 16 7689

This annex lists the patent family members relating to the patent documents cited in the above-mentioned European search report.
The members are as contained in the European Patent Office EDP file on
The European Patent Office is in no way liable for these particulars which are merely given for the purpose of information.

28-07-2025

| Patent document cited in search report | Publication date | Patent family member(s) | Publication date |
|---|---|---|---|
| KR 20150004557 A | 13-01-2015 | NONE | |

For more details about this annex : see Official Journal of the European Patent Office, No. 12/82